(19) Europäisches Patentamt
European Patent Office
Office européen des brevets

(11) **EP 3 025 033 B1**

(12) **EUROPEAN PATENT SPECIFICATION**

(45) Date of publication and mention
of the grant of the patent:
**30.05.2018 Bulletin 2018/22**

(21) Application number: **14767081.4**

(22) Date of filing: **17.07.2014**

(51) Int Cl.:
*F01N 3/025* (2006.01)    *F01N 9/00* (2006.01)
*F01N 11/00* (2006.01)

(86) International application number:
**PCT/IB2014/001340**

(87) International publication number:
**WO 2015/011541 (29.01.2015 Gazette 2015/04)**

(54) **EXHAUST EMISSION CONTROL SYSTEM FOR INTERNAL COMBUSTION ENGINE, AND CONTROL METHOD FOR EXHAUST EMISSION CONTROL SYSTEM**

ABGASEMISSIONSSTEUERUNGSSYSTEM FÜR EINEN VERBRENNUNGSMOTOR UND STEUERUNGSVERFAHREN FÜR DAS ABGASEMISSIONSSTEUERUNGSSYSTEM

SYSTÈME DE CONTRÔLE D'ÉMISSION DES GAZ D'ÉCHAPPEMENT POUR MOTEUR À COMBUSTION INTERNE, ET PROCÉDÉ DE CONTRÔLE POUR SYSTÈME DE COMMANDE D'ÉMISSION DES GAZ D'ÉCHAPPEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2013 JP 2013151550**

(43) Date of publication of application:
**01.06.2016 Bulletin 2016/22**

(73) Proprietors:
• **TOYOTA JIDOSHA KABUSHIKI KAISHA**
  Toyota-shi, Aichi, 471-8571 (JP)
• **KABUSHIKI KAISHA TOYOTA JIDOSHOKKI**
  Kariya-shi, Aichi 448-8671 (JP)

(72) Inventors:
• **KIYOFUJI, Takahiro**
  Toyota-shi,
  Aichi-ken, 471-8571 (JP)
• **YOKOI, Tatsuhisa**
  Toyota-shi,
  Aichi-ken, 471-8571 (JP)
• **ACHIHA, Tomoshi**
  Kariya-shi,
  Aichi-ken, 448-8671 (JP)

(74) Representative: **Kuhnen & Wacker**
**Patent- und Rechtsanwaltsbüro PartG mbB**
**Prinz-Ludwig-Straße 40A**
**85354 Freising (DE)**

(56) References cited:
**EP-A1- 2 216 521       EP-A2- 1 722 082**
**WO-A1-2013/105423     JP-A- 2012 132 468**
**US-A1- 2006 179 826   US-A1- 2007 044 459**

**Description**

BACKGROUND OF THE INVENTION

1. Field of the Invention

The invention relates to an exhaust emission control system for an internal combustion engine, which includes a filter that collects particulate matter contained in exhaust gas that is emitted from the internal combustion engine, and a control method for the exhaust emission control system.

2. Description of Related Art

Particulate matter (hereinafter, referred to as "PM") of which the main component is carbon is contained in exhaust gas that is emitted from an internal combustion engine (mainly, a diesel engine). Exhaust gas is purified by collecting PM in the exhaust gas with a filter, such as a diesel particulate filter (DPF), provided in an exhaust passage. When the amount of PM collected by the filter (DPF) (PM accumulation amount) has reached a predetermined determination value (threshold), a clogging of the filter is suppressed by executing PM burning control (filter regeneration control) for burning and removing PM in the filter.

There is known an exhaust emission control system (see, for example, Japanese Patent Application Publication No. 2012-132468 (JP 2012-132468 A)). The exhaust emission control system includes first estimation means and second estimation means. The first estimation means estimates the PM accumulation amount of a filter on the basis of a differential pressure between an upstream-side pressure and downstream-side pressure of the filter (a differential pressure between the upstream side and downstream side of the filter). The second estimation means estimates the PM accumulation amount of the filter on the basis of the PM emission amount of an internal combustion engine. The exhaust emission control system estimates the PM accumulation amount by selectively using the first estimation means and the second estimation means.

European Patent Application EP 1 722 082 A2 and United States Patent Application US 2006/0179826 A1 disclose other exhaust emission control systems for internal combustion engines controlling filter regeneration according to two different estimations of the PM amount accumulated in the filter wherein one of these estimations is based on the differential pressure detected between upstream and downstream sides of the filter.

SUMMARY OF THE INVENTION

In the exhaust emission control system described in JP 2012-132468 A, the same threshold is used for the first and second estimation means as a threshold for shifting into PM burning control (shifting threshold), so there is the following inconvenience. That is, it is required to set the threshold to a lower value in consideration of one of the first and second estimation means, having a larger estimation error. Therefore, there is the following inconvenience. That is, the accuracy of determination as to whether to shift into PM burning control based on the estimated PM accumulation amount estimated by the first and second estimation means deteriorates, with the result that the frequency of PM burning control increases and the fuel economy deteriorates.

The invention provides an exhaust emission control system that is able to suppress deterioration of fuel economy by suppressing the frequency of PM burning control for removing PM accumulated in a filter, and a control method for the exhaust emission control system.

A first aspect of the invention provides an exhaust emission control system for an internal combustion engine according to appended claim 1. The exhaust emission control system includes: a filter arranged in an exhaust passage of the internal combustion engine, the filter configured to collect particulate matter contained in exhaust gas that is emitted from the internal combustion engine; a differential pressure sensor configured to detect a differential pressure between an upstream side and downstream side of the filter; and an electronic control unit. The electronic control unit is configured to estimate an amount of accumulation of particulate matter (PM accumulation amount) accumulated in the filter, and to execute burning control for burning the particulate matter accumulated in the filter when the estimated amount of accumulation of the particulate matter (estimated PM accumulation amount) has reached a preset threshold. The electronic control unit includes a first estimation portion and a second estimation portion in order to estimate the amount of accumulation of the particulate matter accumulated in the filter, the first estimation portion is configured to estimate the amount of accumulation on the basis of an amount of particulate matter emitted from the internal combustion engine, and the second estimation portion is configured to estimate the amount of accumulation on the basis of the differential pressure between the upstream side and downstream side of the filter. The electronic control unit is configured to include a first threshold for the first estimation portion and a second threshold for the second estimation portion as the preset threshold, and the second threshold is larger than the first threshold.

With the above configuration, the first threshold for the first estimation portion and the second threshold for the second estimation portion, the second threshold being larger than the first threshold, are set. Therefore, it is possible to accurately determine whether to shift into PM burning control on the basis of the PM accumulation amount estimated by the first and second estimation portions. Thus, it is possible to suppress deterioration of fuel economy by reducing the frequency of PM burning control.

In the first aspect of the invention, the electronic control unit is configured to allow the second estimation portion to estimate the amount of accumulation when an accumulated time, in which a condition for applying the differential pressure between the upstream side and downstream side of the filter is satisfied, is longer than or equal to a preset threshold.

With the above configuration, it is possible to reduce a deviation between an actual PM accumulation amount and a PM accumulation amount estimated by the second estimation portion, so it is possible to suppress deterioration of fuel economy by reducing the frequency of PM burning control. That is, when the accumulated time, in which the condition for applying the differential pressure between the upstream side and downstream side of the filter is satisfied, is short, there is a possibility that a deviation between an upstream-downstream differential pressure detected by the differential pressure sensor and an actual differential pressure increases, so there is a possibility that the estimation accuracy of the PM accumulation amount estimated by the second estimation portion is not ensured. However, with the above configuration, the second estimation portion estimates the PM accumulation amount only when the accumulated time, in which the condition for applying the differential pressure between the upstream side and downstream side of the filter is satisfied, is longer than or equal to the threshold. Therefore, it is possible to reduce the deviation between an actual PM accumulation amount and a PM accumulation amount estimated by the second estimation portion, so it is possible to suppress deterioration of fuel economy by reducing the frequency of PM burning control.

In the first aspect of the invention, the control unit may be configured to allow the second estimation portion to estimate the amount of accumulation when the amount of accumulation is larger than or equal to a preset threshold.

With the above configuration, it is possible to reduce a deviation between an actual PM accumulation amount and a PM accumulation amount estimated by the second estimation portion, so it is possible to suppress deterioration of fuel economy by reducing the frequency of PM burning control. That is, when the PM accumulation amount in the filter is small, there is a possibility that an upstream-downstream differential pressure detected by the differential pressure sensor steeply changes for a PM accumulation amount in the filter, so there is a possibility that the estimation accuracy of the PM accumulation amount estimated by the second estimation portion is not ensured. However, with the above configuration, the second estimation portion estimates the PM accumulation amount only when the PM accumulation amount in the filter is larger than or equal to the threshold. Therefore, it is possible to reduce a deviation between an actual PM accumulation amount and a PM accumulation amount estimated by the second estimation portion, so it is possible to suppress deterioration of fuel economy by reducing the frequency of PM burning control.

In the first aspect of the invention, the control unit may be configured to clear the accumulated time when the burning control has normally completed.

With the above configuration, it is possible to prevent an infinite increase in the accumulated time by clearing the accumulated time each time the PM burning control normally completes, so it is possible to improve the detection accuracy of the upstream-downstream differential pressure detected by the differential pressure sensor.

In the first aspect of the invention, the control unit may be configured to clear the accumulated time when at least one of (i) a condition that an average vehicle speed is lower than a predetermined value, (ii) a condition that a travel distance in one trip is shorter than a predetermined value and (iii) a condition that a frequency at which the differential pressure is detected by the differential pressure sensor is smaller than a predetermined value is satisfied.

With the above configuration, when there is a possibility that the correlation between the upstream-downstream differential pressure and the PM accumulation amount deteriorates (when the average vehicle speed is lower than the predetermined value, when the travel distance in one trip is shorter than the predetermined value or when the frequency at which the differential pressure is detected by the differential pressure sensor is smaller than the predetermined value), it is possible to reduce a deviation between an actual PM accumulation amount and an estimated PM accumulation amount by clearing the accumulated time, so it is possible to suppress deterioration of fuel economy by reducing the frequency of the PM burning control.

According to the first aspect of the invention, the first threshold for the first estimation portion and the second threshold for the second estimation portion, the second threshold being larger than the first threshold, are set. Therefore, it is possible to accurately determine whether to shift into PM burning control on the basis of the PM accumulation amount estimated by the first and second estimation portions. Thus, it is possible to suppress deterioration of fuel economy by reducing the frequency of PM burning control.

A second aspect of the invention provides a control method for an exhaust emission control system for an internal combustion engine according to appended claim 5. The exhaust emission control system includes: a filter arranged in an exhaust passage of the internal combustion engine, the filter configured to collect particulate matter contained in exhaust gas that is emitted from the internal combustion engine; and a differential pressure sensor configured to detect a differential pressure between an upstream side and downstream side of the filter. The control method includes: (a) estimating an amount of accumulation of particulate matter accumulated in the filter; (b) executing burning control for burning the particulate matter accumulated in the filter when the estimated amount of accumulation of the particulate matter has reached a preset threshold; and (c) executing a first estimation process for estimating the amount of accumulation of the particulate matter on the basis of an amount of particulate matter emitted from the internal combustion engine and a second estimation process for estimating the amount of accumulation on the basis of the differential pressure between the upstream side and downstream side of the filter in order to estimate the amount of accumulation of the particulate matter accumulated in the filter. A first threshold for the first estimation process and a second threshold for the second estimation process are provided as the preset threshold, and the second threshold is larger than the first threshold.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic configuration view that shows an example of a diesel engine according to an embodiment of the invention;
FIG. 2 is a block diagram that shows the configuration of a control system, such as an ECU;
FIG. 3 is a view that shows an example of a map that is consulted at the time when a PM emission amount is obtained;
FIG. 4 is a graph that shows the correlation between an accumulated time in which a condition for applying a differential pressure of a DPF is satisfied and an upstream-downstream differential pressure of the DPF;
FIG. 5 is a graph that shows the correlation between a PM accumulation amount in the DPF and an upstream-downstream differential pressure of the DPF;
FIG. 6 is a flowchart that shows an example of control for calculating a DPF differential pressure consultation permission flag, which is executed by the ECU;
FIG. 7 is a flowchart that shows an example of control for switching between a first estimation process and a second estimation process, which is executed by the ECU; and
FIG. 8 is a flowchart that shows an alternative embodiment of control for calculating the DPF differential pressure consultation permission flag, which is executed by the ECU.

DETAILED DESCRIPTION OF EMBODIMENTS

An example embodiment of the invention will be described with reference to the accompanying drawings. Hereinafter, the invention is applied to a common-rail in-cylinder direct-injection multicylinder diesel engine (compression self-ignition internal combustion engine) mounted on a vehicle.

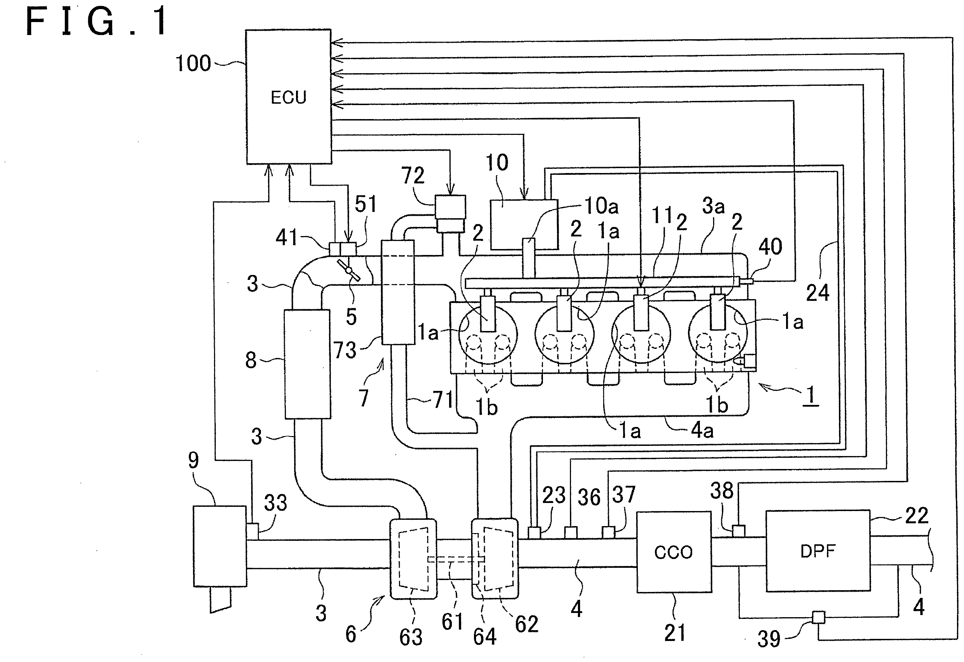

The schematic configuration of the diesel engine (hereinafter, simply referred to as "engine") to which the invention is applied will be described with reference to FIG. 1. As shown in FIG. 1, the engine 1 is an in-line four-cylinder engine. An injector (fuel injection valve) 2 is arranged in a combustion chamber 1a of each cylinder of the engine 1. Each injector 2 injects fuel that is subjected to combustion in a corresponding one of the combustion chambers 1a. The injector 2 of each cylinder is connected to a common rail 11. A supply pump 10 is connected to the common rail 11.

The supply pump 10 draws fuel from a fuel tank, pressurizes the drawn fuel, and then supplies the high-pressure fuel to the common rail 11 via a fuel passage 10a. The common rail 11 serves as an accumulator that keeps (accumulates) the high-pressure fuel, supplied from the supply pump 10, at a predetermined pressure, and distributes the accumulated fuel to the injectors 2. Each injector 2 is an electromagnetically-driven on-off valve that, when a predetermined voltage is applied, opens to inject and supply fuel into a corresponding one of the combustion chambers 1a. The open/closed state (fuel injection amount and injection timing) of each injector 2 is controlled by an electronic control unit (ECU) 100 through a duty ratio.

An intake passage 3 and an exhaust passage 4 are connected to the engine 1. In the intake passage 3, an air cleaner 9, an air flow meter 33, a compressor impeller 63 of a turbocharger 6, an intercooler 8 and a throttle valve 5 are arranged in order from the upstream side of flow of intake air to the downstream side thereof. The throttle valve 5 is a valve that adjusts an intake air flow rate. A throttle opening degree that is an opening degree of the throttle valve 5 is adjusted by a throttle motor 51. The throttle opening degree of the throttle valve 5 is detected by a throttle opening degree sensor 41. The intake passage 3 is branched at an intake manifold 3a in correspondence with the cylinders. The intake manifold 3a is arranged downstream of the throttle valve 5.

The exhaust passage 4 is configured to be collected from a state, branched into the cylinders, into one at an exhaust manifold 4a. The exhaust manifold 4a is connected to the combustion chambers 1a of the cylinders of the engine 1. Exhaust gas produced through combustion of fuel in the combustion chambers 1a is delivered to the exhaust passage 4. A catalytic converter oxidation (CCO) 21 and a filter (DPF) 22 are arranged in the exhaust passage 4 in order from the upstream side of flow of exhaust gas toward the downstream side thereof. The CCO 21 oxidizes and purifies hydrocarbons (HC) and carbon monoxide (CO) contained in exhaust gas. The DPF 22 collects PM. The DPF 22 is formed of, for example, a porous ceramic structure. The DPF 22 collects PM contained in exhaust gas at the time when the exhaust gas passes through a porous wall. A catalyst (for example, an oxidation catalyst that mainly contains precious metal, such as platinum) for burning and removing collected PM at the time of PM burning control is supported on the DPF 22.

A fuel addition valve 23 is arranged in the exhaust passage 4 at a portion upstream of the CCO 21 (upstream side of flow of exhaust gas) and downstream of a turbine wheel 62 of the turbocharger 6 (described later). Fuel is supplied from the supply pump 10 to the fuel addition valve 23 via an additive fuel passage 24. The fuel addition valve 23 is formed of an electronically-controlled on-off valve. The ECU 100 controls the open/closed state of the fuel addition valve 23 to control the amount and timing of adding fuel to the exhaust passage 4. Unburned fuel injected from the fuel addition valve 23 to the exhaust passage 4 oxidizes at the CCO 21 to heat exhaust gas by the heat of reaction. In addition, unburned fuel injected from the fuel addition valve 23 oxidizes also at the DPF 22, heats exhaust gas by the heat of reaction to burn and remove PM collected in the DPF 22. The fuel addition valve 23 may be provided in the exhaust manifold 4a.

An A/F sensor 36 and a first exhaust temperature sensor 37 are arranged in the exhaust passage 4 at a portion upstream (upstream side of flow of exhaust gas) of the CCO 21. The A/F sensor 36 detects the air-fuel ratio (A/F) of exhaust gas flowing into the CCO 21. The first exhaust temperature sensor 37 detects the temperature of exhaust gas flowing into the CCO 21. A second exhaust temperature sensor 38 is arranged in the exhaust passage 4 between the CCO 21 and the DPF 22. The second exhaust temperature sensor 38 detects the temperature of exhaust gas flowing into the DPF 22 (filter temperature). A differential pressure sensor 39 is arranged so as to detect a differential pressure (upstream-downstream differential pressure) ΔP between a pressure upstream of the DPF 22 and a pressure downstream of the DPF 22. Output signals of the A/F sensor 36, the first exhaust temperature sensor 37, the second exhaust temperature sensor 38 and the differential pressure sensor 39 are input to the ECU 100.

The turbocharger 6 is arranged for the engine 1. The turbocharger 6 includes the turbine wheel 62 and the compressor impeller 63 that are coupled to each other via a rotor shaft 61. The compressor impeller 63 is arranged inside the intake passage 3. The turbine wheel 62 is arranged inside the exhaust passage 4. The turbocharger 6 rotates the compressor impeller 63 by utilizing exhaust flow (exhaust pressure) received by the turbine wheel 62, thus supercharging intake air. The turbocharger 6 is, for example, a variable nozzle turbocharger in which a variable nozzle vane mechanism 64 is provided adjacent to the turbine wheel 62. The turbocharger 6 is able to adjust the supercharging pressure of the engine 1 by adjusting the opening degree of the variable nozzle vane mechanism 64. Intake air heated through supercharging of the turbocharger 6 is forcibly cooled by the intercooler 8 arranged in the intake passage 3.

An EGR device 7 is arranged at the engine 1. The EGR device 7 returns part of exhaust gas, flowing through the exhaust passage 4, to the intake passage 3, and supplies the exhaust gas to the combustion chambers 1a of the cylinders again to reduce combustion temperature. Thus, the amount of generation of NOx is reduced. The EGR device 7 includes an EGR passage 71 that connects the intake manifold 3a to the exhaust manifold 4a. An EGR cooler 73 and an EGR valve 72 are arranged in the EGR passage 71 in order from the upstream side of flow of EGR gas toward the downstream side thereof. The EGR cooler 73 is used to cool EGR gas that passes (returns) through the EGR passage 71. The amount of EGR gas (the amount of returned exhaust gas) introduced from the exhaust passage 4 (exhaust manifold 4a) into the intake passage 3 (intake manifold 3a) is allowed to be adjusted by adjusting the opening degree of the EGR valve 72.

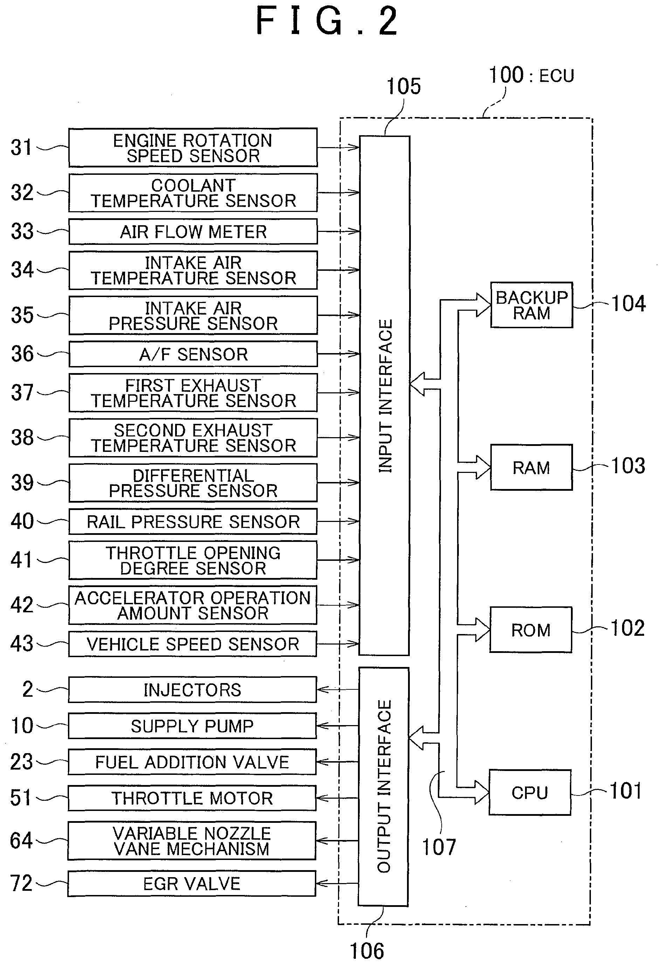

Various operations of the thus configured engine 1 are controlled by the ECU 100. As shown in FIG. 2, the ECU 100 includes a CPU 101, a ROM 102, a RAM 103, a backup RAM 104, and the like. Various control programs, maps that are consulted at the time of executing those various control programs, and the like, are stored in the ROM 102. The CPU 101 executes arithmetic processing on the basis of the various control programs and maps stored in the ROM 102. The RAM 103 is a memory that temporarily stores computed results of the CPU 101, data input from the sensors, and the like. The backup RAM 104 is a nonvolatile memory that stores data, and the like, to be saved at the time when the engine 1 is stopped or when ignition is turned off. The CPU 101, the ROM 102, the RAM 103 and the backup RAM 104 are connected to one another via a bidirectional bus 107, and are connected to an input interface 105 and an output interface 106.

The input interface 105 executes processing, such as A/D conversion, over detected signals from the sensors and converts the detected signals to detected information processable by the CPU 101. An engine rotation speed sensor 31, a coolant temperature sensor 32, an air flow meter 33, an intake air temperature sensor 34, an intake air pressure sensor 35, the A/F sensor 36, the first exhaust temperature sensor 37, the second exhaust temperature sensor 38, the differential pressure sensor 39, a rail pressure sensor 40, the throttle opening degree sensor 41, an accelerator operation amount sensor 42, a vehicle speed sensor 43, and the like, are communicably connected to the input interface 105.

The engine rotation speed sensor 31 detects the rotation speed of a crankshaft that is an output shaft of the engine 1. The coolant temperature sensor 32 detects an engine coolant temperature (coolant temperature). The air flow meter 33 detects an intake air flow rate. The intake air temperature sensor 34 is arranged in the intake manifold 3a, and detects the temperature of intake air. The intake air pressure sensor 35 is arranged in the intake manifold 3a, and detects the pressure of intake air. The rail pressure sensor 40 detects the pressure of high-pressure fuel in the common rail 11. The accelerator operation amount sensor 42 detects the driver's depression amount of an accelerator pedal. The vehicle speed sensor 43 detects the speed of the vehicle.

The output interface 106 executes processing, such as D/A conversion, over information, such as command information, output from the CPU 101, and converts the information to command signals, and the like, receivable by the units (or devices). The injectors 2, the supply pump 10, the fuel addition valve 23, the throttle motor 51, the variable nozzle vane mechanism 64, the EGR valve 72, and the like, are communicably connected to the output interface 106 , and are controlled on the basis of the operating state, and the like, of the engine 1. That is, various controls over the engine 1 are executed on the basis of the output signals of the various sensors. The various controls include control over the opening degree of the throttle valve 5 of the engine 1, open/close control over the injectors 2 (fuel injection amount control and fuel injection timing control). In addition, PM burning control (filter regeneration control) is executed as will be described below.

The ECU 100 estimates the amount of PM accumulated in the DPF 22, and sets a PM burning flag to an on state and shifts into a PM burning mode when the estimated amount has reached a predetermined threshold (a value at which a PM burning process is required for the DPF 22). In the PM burning mode, PM burning control is executed in order to remove the PM accumulated in the DPF 22. In this PM burning control, in order to burn and remove the PM accumulated in the DPF 22, fuel is injected from the fuel addition valve 23 into the exhaust passage 4. A catalyst bed temperature of the DPF 22 increases as a result of fuel injection (fuel addition) from the fuel addition valve 23, and the PM accumulated in the DPF 22 is burned and removed. When the estimated amount of PM accumulated in the DPF 22 is smaller than the predetermined threshold, the ECU 100 sets the PM burning flag to an off state, and does not shift into the PM burning mode.

Fuel is added from the fuel addition valve 23 to the exhaust passage 4 by controlling the opening degree of the fuel addition valve 23. More specifically, a required additive amount and additive timing are calculated by consulting a map created through an experiment, calculation, or the like, in advance on the basis of the engine rotation speed NE that is obtained from the output signal of the engine rotation speed sensor 31, and the opening degree of the fuel addition valve 23 is controlled on the basis of the calculated result.

At the time of determining whether it is required to shift into the above-described PM burning control, the ECU 100 estimates the amount of PM accumulated in the DPF 22 on the basis of the operating state of the engine 1. In this embodiment, the ECU 100 executes two estimation processes as the process of estimating the PM accumulation amount in the DPF 22.

(1) Process of Estimating PM Accumulation Amount on the basis of PM Emission Amount

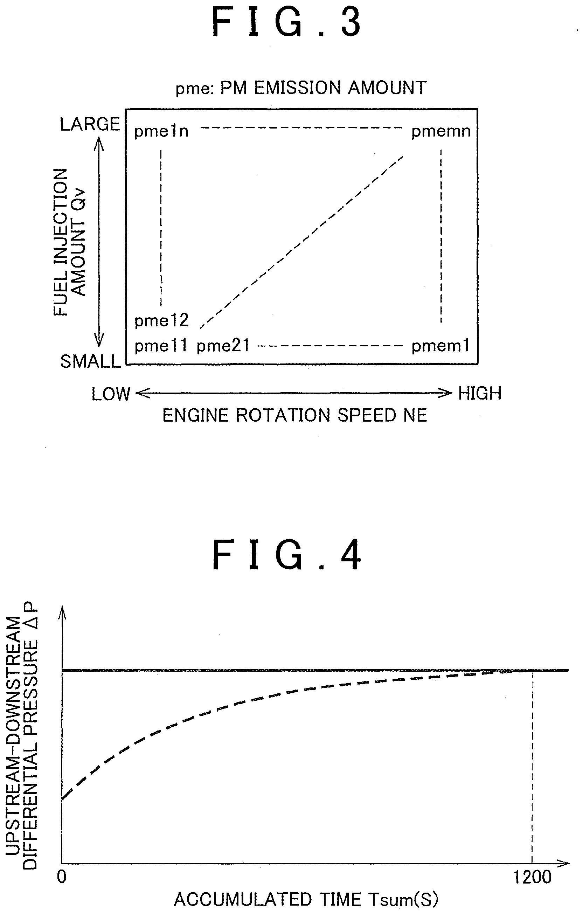

Initially, an estimated PM accumulation amount PMe in the DPF 22 is calculated on the basis of a PM emission amount pme from the engine 1 as a first estimation process (first estimation portion). The PM emission amount pme is the amount of PM that is emitted from all the combustion chambers of the engine 1 per unit time (for example, in one control interval of the estimation process). The PM emission amount pme is, for example, allowed to be calculated on the basis of an engine rotation speed NE and a fuel injection amount Qv (command value). The engine rotation speed NE is obtained from the output signal of the engine rotation speed sensor 31. For example, by consulting the map shown in FIG. 3, it is possible to obtain the PM emission amount pme on the basis of the engine rotation speed NE and the fuel injection amount Qv. The map shown in FIG. 3 is obtained by mapping values of the PM emission amount pme through an experiment, calculation, or the like, by using the engine rotation speed NE and the fuel injection amount Qv as parameters, and is stored in the ROM 102 of the ECU 100. In the map of FIG. 3, when the engine rotation speed NE or the fuel injection amount Qv is a value between points in the map, the PM emission amount pme is calculated through interpolation process. By accumulating the PM emission amount pme calculated on the basis of the engine rotation speed NE and the fuel injection amount Qv, the estimated PM accumulation amount PMe in the DPF 22 is calculated. The estimated PM accumulation amount PMe in the DPF 22 is reset to an initial value (for example, 0) when PM burning control over the DPF 22 has normally completed.

(2) Process of Estimating PM Accumulation Amount on the basis of Upstream-Downstream Differential Pressure

Next, an estimated PM accumulation amount PMd in the DPF 22 is calculated on the basis of the upstream-downstream differential pressure $\Delta P$ of the DPF 22 as a second estimation process (second estimation portion). With the progress of accumulation of PM in the DPF 22, PM accumulated in the DPF 22 interferes with flow of exhaust gas, and the flow resistance of exhaust gas increases. The upstream-downstream differential pressure ∆P increases with an increase in the PM accumulation amount accumulated in the DPF 22. On the other hand, the upstream-downstream differential pressure ∆P decreases as the PM accumulation amount accumulated in the DPF 22 decreases with the progress of burning and removal of PM accumulated in the DPF 22. In this way, because there is a correlation between the upstream-downstream differential pressure ∆P of the DPF 22 and the PM accumulation amount accumulated in the DPF 22, it is possible to estimate the PM accumulation amount in the DPF 22 on the basis of the upstream-downstream differential pressure ∆P.

By utilizing this point, the PM accumulation amount accumulated in the DPF 22 (estimated PM accumulation amount PMd) is estimated by consulting the map on the basis of the upstream-downstream differential pressure ∆P that is obtained from the output signal of the differential pressure sensor 39 provided in the exhaust passage 4. The map that is used to calculate the estimated PM accumulation amount PMd is obtained by mapping values adapted through an experiment, calculation, or the like, in consideration of the above-described correlation between the upstream-downstream differential pressure ∆P and the PM accumulation amount, and is stored in the ROM 102 of the ECU 100.

In this embodiment, the PM accumulation amount in the DPF 22 is estimated by the above-described two estimation processes, and a threshold (shifting threshold) for determining whether to shift into PM burning control is set for each estimation process. That is, a first threshold Th1 for the first estimation process (the process of estimating the PM accumulation amount on the basis of the PM emission amount) and a second threshold Th2 for the second estimation process (the process of estimating the PM accumulation amount on the basis of the upstream-downstream differential pressure) are set to different values. The second threshold Th2 for the second estimation process is larger than the first threshold Th1 for the first estimation process (Th1 < The2).

Incidentally, in a situation that there is a large difference between an upstream-downstream differential pressure ∆P of the DPF 22, detected by the differential pressure sensor 39, and an actual differential pressure, there is a possibility that the estimation accuracy of the PM accumulation amount PMd in the DPF 22, estimated by the second estimation process, deteriorates. In this embodiment, in a situation that it is possible to ensure the estimation accuracy of the PM accumulation amount PMd in the DPF 22, estimated by the second estimation process, the second estimation process is permitted, and it is determined whether to shift into PM burning control on the basis of the PM accumulation amount PMd estimated by the second estimation process. On the other hand, in a situation that it is not possible to ensure the estimation accuracy of the PM accumulation amount PMd in the DPF 22, estimated by the second estimation process, the second estimation process is prohibited, and it is determined whether to shift into PM burning control on the basis of the PM accumulation amount PMe estimated by the first estimation process. With such a switch between the first and second estimation processes, the threshold that is used as the shifting threshold also switches between the first threshold Th1 and the second threshold Th2. Hereinafter, PM burning control in this embodiment will be described with reference to FIG. 4 to FIG. 7.

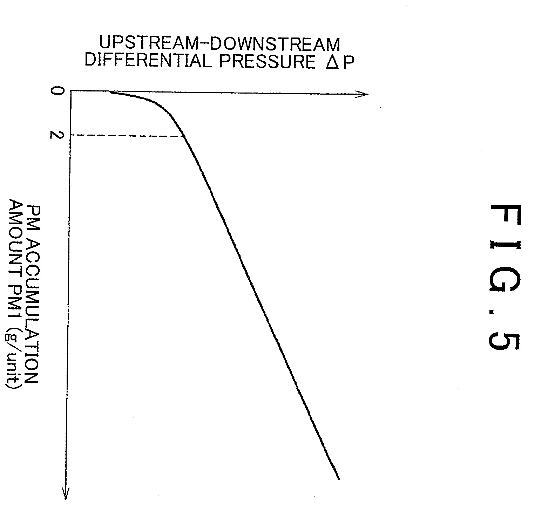

The situation that the estimation accuracy of the PM accumulation amount PMd in the DPF 22, estimated by the second estimation process, deteriorates, in other words, the situation that there is a large variation in the upstream-downstream differential pressure ∆P of the DPF 22, is as follows. This situation is, for example, the case where an accumulated time Tsum (see FIG. 4) in which the condition for applying the differential pressure of the DPF 22 is satisfied is shorter than a predetermined time Ta, the case where a PM accumulation amount PM1 (see FIG. 5) in the DPF 22 is smaller than a predetermined value PMa, or the like. Hereinafter, the description will be made for each case.

The condition for applying the differential pressure of the DPF 22 is a precondition for ensuring the estimation accuracy of the PM accumulation amount PMd in the DPF 22, estimated by the second estimation process. When this precondition (the condition for applying the differential pressure of the DPF 22) is not satisfied, there is a large variation in the upstream-downstream differential pressure ∆P of the DPF 22, detected by the differential pressure sensor 39, and there is a high possibility that the estimation accuracy of the PM accumulation amount PMd in the DPF 22, estimated by the second estimation process, deteriorates. Even when the condition for applying the differential pressure of the DPF 22 is satisfied, but when the accumulated time Tsum, in which the condition for applying the differential pressure is satisfied, is shorter than the predetermined time, there is a large variation in the upstream-downstream differential pressure ∆P of the DPF 22, detected by the differential pressure sensor 39, and there is a high possibility that the estimation accuracy of the PM accumulation amount PMd in the DPF 22, estimated by the second estimation process, deteriorates.

The condition for applying the differential pressure of the DPF 22 includes, for example, the following conditions [a1] to [a7]. When all the conditions [a1] to [a7] are satisfied, it is determined that the condition for applying the differential pressure of the DPF 22 is satisfied. On the other hand, when at least one of the conditions [a1] to [a7] is not satisfied, it is determined that the condition for applying the differential pressure of the DPF 22 is not satisfied. The conditions [a1] to [a7] are only illustrative, and only part of the conditions [a1] to [a7] may be employed as the condition for applying the differential pressure of the DPF 22. A condition other than the conditions [a1] to [a7] may be employed as the condition for applying the differential pressure of the DPF 22.

The condition [a1] is a condition that the exhaust gas flow rate that is detected by exhaust gas flow rate detector

7

is higher than or equal to a predetermined value. The condition [a2] is a condition that the rate of change (per unit time) in the upstream-downstream differential pressure ∆P of the DPF 22, which is detected by the differential pressure sensor 39, is lower than or equal to a predetermined value. The condition [a3] is a condition that the temperature of exhaust gas flowing into the DPF 22, which is detected by the second exhaust temperature sensor 38, is higher than or equal to a predetermined value. The condition [a4] is a condition that there is no influence of an increase in the upstream-downstream differential pressure ∆P due to entry of water into the DPF 22. The condition [a5] is a condition that the DPF 22 and its associated components (the fuel addition valve 23, the air flow meter 33, the second exhaust temperature sensor 38, the differential pressure sensor 39, and the like) have no abnormality. The condition [a6] is a condition that fuel addition control that uses the fuel addition valve 23 is not presently executed. The condition [a7] is a condition that zero learning of the differential pressure sensor 39 has been presently completed.

When it is determined that the condition for applying the differential pressure of the DPF 22 is satisfied (for example, when all the above-described conditions [a1] to [a7] are satisfied), the accumulated time Tsum in which the condition for applying the differential pressure of the DPF 22 is satisfied is counted. When PM burning control over the DPF 22 has normally completed, the accumulated time Tsum is reset to an initial value (for example, 0 [s]).

There is the correlation shown in FIG. 4 between the accumulated time Tsum in which the condition for applying the differential pressure of the DPF 22 is satisfied and the upstream-downstream differential pressure ∆P of the DPF 22. In FIG. 4, the ratio of an upstream-downstream differential pressure ∆P, detected by the differential pressure sensor 39, to an actual upstream-downstream differential pressure ∆P of the DPF 22 is indicated by dashed line. As shown in FIG. 4, there is the correlation between the accumulated time Tsum and the upstream-downstream differential pressure ∆P of the DPF 22 as follows. As the accumulated time Tsum extends, the value of the ratio approaches to 1 (indicated by the continuous line in FIG. 4), and the upstream-downstream differential pressure ∆P of the DPF 22, detected by the differential pressure sensor 39, approaches (converges) to the actual differential pressure. For example, when the accumulated time Tsum is 0 [s], the upstream-downstream differential pressure ∆P of the DPF 22, detected by the differential pressure sensor 39, is just a value about one-third of the actual differential pressure, and the upstream-downstream differential pressure ∆P, detected by the differential pressure sensor 39, significantly deviates from the actual differential pressure. However, as the accumulated time Tsum extends, the upstream-downstream differential pressure ∆P of the DPF 22, detected by the differential pressure sensor 39, gradually approaches to the actual differential pressure. When the accumulated time Tsum is longer than or equal to 1200 [s], the value of the above-described ratio is substantially 1, and the upstream-downstream differential pressure ∆P of the DPF 22, detected by the differential pressure sensor 39, substantially coincides with the actual differential pressure.

When the accumulated time Tsum, in which the condition for applying the differential pressure of the DPF 22 is satisfied, is shorter than a predetermined time Ta (for example, 1200 [s]), it is determined that it is the situation that the estimation accuracy of the PM accumulation amount PMd in the DPF 22, estimated by the second estimation process, deteriorates. On the other hand, when the accumulated time Tsum, in which the condition for applying the differential pressure of the DPF 22 is satisfied, is longer than or equal to the predetermined time Ta, it is determined that it is the situation that the estimation accuracy of the PM accumulation amount PMd in the DPF 22, estimated by the second estimation process, is ensured.

Subsequently, there is the correlation shown in FIG. 5 between a PM accumulation amount PM1 in the DPF 22 and an upstream-downstream differential pressure ∆P of the DPF 22, detected by the differential pressure sensor 39. In this case, the PM accumulation amount PMd estimated by the second estimation process is allowed to be used as the PM accumulation amount PM1 in the DPF 22. As shown in FIG. 5, when the PM accumulation amount PM1 (the PM accumulation amount PMd estimated by the second estimation process) in the DPF 22 is smaller than 2 [g/unit], the upstream-downstream differential pressure ∆P of the DPF 22, detected by the differential pressure sensor 39, steeply changes for the PM accumulation amount PM1 in the DPF 22. However, when the PM accumulation amount PM1 in the DPF 22 is larger than or equal to 2 [g/unit], the upstream-downstream differential pressure ∆P of the DPF 22, detected by the differential pressure sensor 39, substantially linearly changes for the PM accumulation amount PM1 in the DPF 22.

Therefore, when the PM accumulation amount PM1 in the DPF 22 is smaller than a predetermined value PMa (for example, 2 [g/unit]), it is determined that it is the situation that the estimation accuracy of the PM accumulation amount PMd in the DPF 22, estimated by the second estimation process, deteriorates. On the other hand, when the PM accumulation amount PM1 in the DPF 22 is larger than or equal to the predetermined value PMa, it is determined that it is the situation that the estimation accuracy of the PM accumulation amount PMd in the DPF 22, estimated by the second estimation process, is ensured.

In this way, when the accumulated time Tsum, in which the condition for applying the differential pressure of the DPF 22 is satisfied, is shorter than the predetermined time Ta or when the PM accumulation amount PM1 in the DPF 22 is smaller than the predetermined value PMa, it is determined that it is the situation that the estimation accuracy of the PM accumulation amount PMd in the DPF 22, estimated by the second estimation process, deteriorates. In this case, the second estimation process is prohibited, and it is determined whether to shift into PM burning control on the basis of the PM accumulation amount PMe in the DPF 22, estimated by the first estimation process. At this time, the shifting threshold for determining whether to shift into PM burning control is set to the first threshold Th1. When the PM accumulation amount PMe in the DPF 22, estimated by the first estimation process, is larger than or equal to the first threshold Th1, the PM burning flag is set to an on state, the ECU 100 shifts into the PM burning mode, and executes PM burning control.

On the other hand, when accumulated time Tsum, in which the condition for applying the differential pressure of the DPF 22 is satisfied, is longer than or equal to the predetermined time Ta and the PM accumulation amount PM1 in the DPF 22 is larger than or equal to the predetermined value PMa, it is determined that it is the situation that the estimation accuracy of the PM accumulation amount PMd in the DPF 22, estimated by the second estimation process, is ensured. In this case, the second estimation process is permitted, and it is determined whether to shift into PM burning control on the basis of the PM accumulation amount PMd estimated by the second estimation process. At this time, the shifting threshold for determining whether to shift into PM burning control is set to the second threshold Th2. When the PM accumulation amount PMd in the DPF 22, estimated by the second estimation process, is larger than or equal to the second threshold Th2, the PM burning flag is set to an the state, the ECU 100 shift into the PM burning mode, and executes PM burning control.

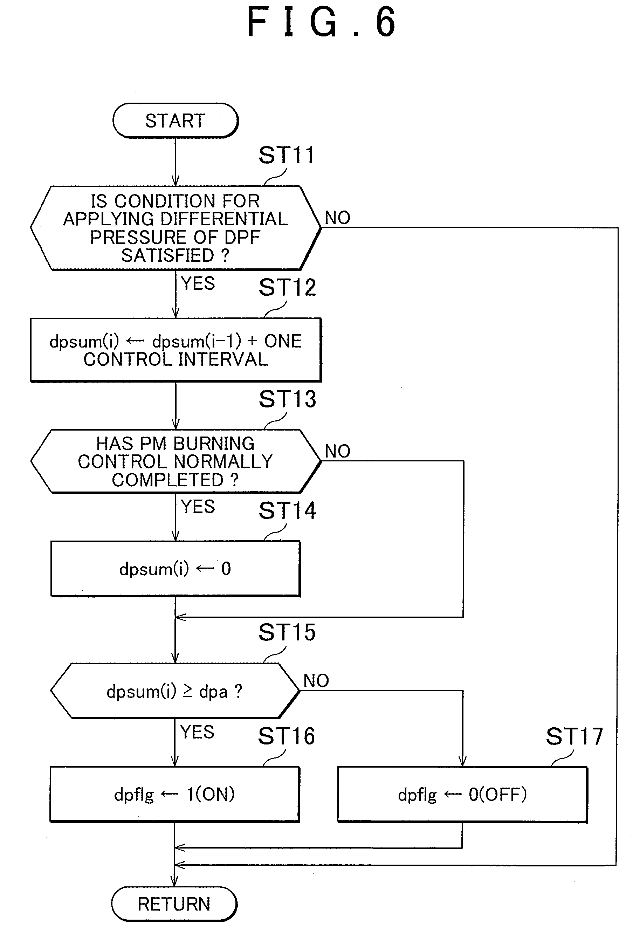

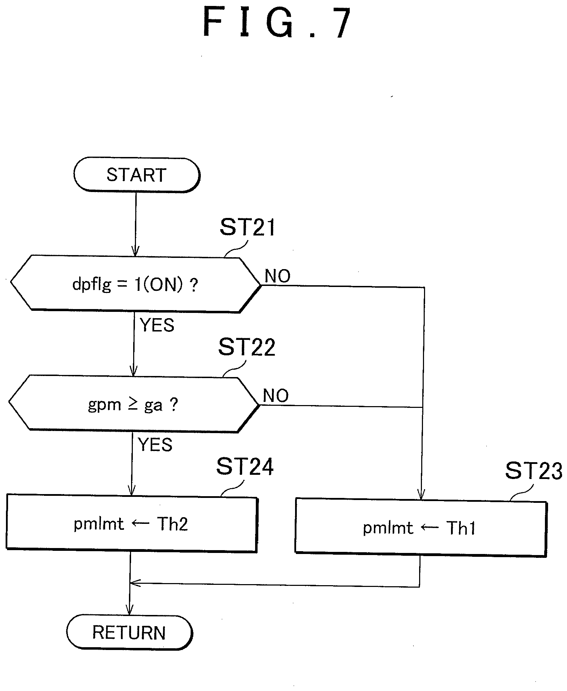

Next, an example of PM burning control according to the embodiment will be described with reference to the flowcharts shown in FIG. 6 and FIG. 7. FIG. 6 is a flowchart that shows an example of control for calculating a DPF differential pressure consultation permission flag, which is executed by the ECU 100. FIG. 7 is a flowchart that shows an example of control for switching between the first and second estimation processes, which is executed by the ECU 100. The processes of the flowcharts shown in FIG. 6 and FIG. 7 may be collectively executed in a single flowchart.

Initially, control for calculating a DPF differential pressure consultation permission flag, which is shown in FIG. 6, will be described. The processing routine shown in FIG. 6 is repeatedly executed at predetermined control intervals (for example, about several milliseconds to several tens of milliseconds) in the ECU 100.

In step ST11, it is determined whether the condition for applying the differential pressure of the DPF 22 is satisfied. When affirmative determination is made in step ST11, the process proceeds to step ST12. When negative determination is made in step ST11, the process returns. The condition for applying the differential pressure of the DPF 22 includes the above-described conditions [a1] to [a7]. When all the conditions [a1] to [a7] are satisfied, it is determined that the condition for applying the differential pressure of the DPF 22 is satisfied. On the other hand, when at least one of the conditions [a1] to [a7] is not satisfied, it is determined that the condition for applying the differential pressure of the DPF 22 is not satisfied.

In step ST12, a DPF differential pressure consultation permission accumulation counter is counted up. The DPF differential pressure consultation permission accumulation counter is used to count the accumulated time Tsum in which the above described condition for applying the differential pressure of the DPF 22 is satisfied. As expressed by the following mathematical expression (1), a current counter value dpsum(i) is calculated by adding one control interval (for example, about several milliseconds to several tens of milliseconds) to a previous counter value dpsum(i-1). That is, the counter value dpsum(i) calculated by the mathematical expression (1) corresponds to the accumulated time Tsum.

$$\text{dpsum(i)} \leftarrow \text{dpsum(i-1)} + \text{one control interval} \qquad (1)$$

Subsequently, it is determined in step ST13 whether PM burning control has normally completed. When negative determination is made in step ST13, the process proceeds to step ST15. On the other hand, when affirmative determination is made in step ST13, the process proceeds to step ST14 and then proceeds to step ST15. In step ST14, the counter value dpsum(i) of the DPF differential pressure consultation permission accumulation counter is cleared (dpsum(i) $\leftarrow$ 0). In this way, by clearing the counter value dpsum(i) each time PM burning control normally completes, it is possible to prevent an infinite increase in the counter value dpsum(i), and it is possible to improve the accuracy of detecting the upstream-downstream differential pressure $\Delta P$ of the DPF 22 by the differential pressure sensor 39.

In step ST15, it is determined whether the counter value dpsum(i) of the DPF differential pressure consultation permission accumulation counter is larger than or equal to a predetermined value dpa(threshold). The determination of step ST15 is similar to the determination as to whether the above-described accumulated time Tsum is longer than or equal to the predetermined time Ta. The predetermined value dpa in step ST15 is set to a value corresponding to the above-described predetermined time Ta (for example, 1200 [s]).

When affirmative determination is made in step ST15 (dpsum(i) $\geq$ dpa), the process proceeds to step ST16. When negative determination is made in step ST15 (dpsum(i) < dpa), the process proceeds to step ST 17.

In step ST16, the DPF differential pressure consultation permission flag dpflg is set to an on state (dpflg $\leftarrow$ 1). On the other hand, in step ST17, the DPF differential pressure consultation permission flag dpflg is set to an off state (dpflg $\leftarrow$ 0).

Next, control for switching between the first and second estimation processes (control for switching between the first and second thresholds), shown in FIG. 7, will be described. The processing routine shown in FIG. 7 is repeatedly executed at the predetermined control intervals (for example, about several milliseconds to several tens of milliseconds) in the ECU 100.

In step ST21, it is determined whether the DPF differential pressure consultation permission flag dpflg is in the on state. That is, it is determined whether the DPF differential pressure consultation permission flag dpflg obtained through control for calculating the DPF differential pressure consultation permission flag, shown in FIG. 6, is in the on state. When affirmative determination is made in step ST21 (dpflg = 1), the process proceeds to step ST22. When negative determination is made in step ST21 (dpflg = 0), the process proceeds to step ST23.

In step ST22, it is determined whether the PM accumulation amount gpm in the DPF 22 is larger than or equal to a predetermined value (threshold) ga. The determination of step ST22 is similar to the determination as to whether the above-described PM accumulation amount PM1 in the DPF 22 is larger than or equal to the predetermined value PMa. The predetermined value ga in step ST22 is set to a value corresponding to the above-described predetermined value PMa (for example , 2 [g/unit]). In this determination, the PM accumulation amount PMd in the DPF 22, estimated by the second estimation process, is used as the PM accumulation amount PM1 in the DPF 22.

When affirmative determination is made in step ST22 (gpm ← ga), the process proceeds to step ST24. When negative determination is made in step ST22 (gpm < ga), the process proceeds to step ST23.

In step ST23, the process of estimating the PM accumulation amount in the DPF 22 for determining whether to shift into PM burning control is switched to the first estimation process, and the shifting threshold pmlmt is switched to the first threshold Th1 (pmlmt ← Th1). In this way, when the DPF differential pressure consultation permission flag dpflg is in the off state or when the PM accumulation amount gpm in the DPF 22 is smaller than the predetermined value ga, the second estimation process is prohibited. It is determined whether to shift into PM burning control on the basis of the PM accumulation amount PMe in the DPF 22, estimated by the first estimation process.

The first threshold Th1 is, for example, set in consideration of the following factors [b1] to [b3]. The factor [b1] is variations in the PM emission amount from the engine 1. The factor [b2] is variations in the amount of unburned PM remaining in the DPF 22. The factor [b3] is variations due to PM that adheres to exhaust system components.

In step ST24, the process of estimating the PM accumulation amount in the DPF 22 for determining whether to shift into PM burning control is switched to the second estimation process, and the shifting threshold pmlmt is switched to the second threshold Th2 (pmlmt ← Th2). In this way, when the DPF differential pressure consultation permission flag dpflg is in the on state and the PM accumulation amount gpm in the DPF 22 is larger than or equal to the predetermined value ga, the second estimation process is permitted. It is determined whether to shift into PM burning control on the basis of the PM accumulation amount PMd in the DPF 22, estimated by the second estimation process. The first estimation process is allowed to be executed during execution of the second estimation process.

The second threshold Th2 is set in consideration of, for example, the following factors [c1] to [c9], and is set to a value larger than the first threshold Th1 (Th1 < Th2). The factor [c1] is variations in detection of the differential pressure sensor 39 due to pulsation of the differential pressure of exhaust gas. The factor [c2] is variations in detection (temperature characteristics, degradation, and the like) of the differential pressure sensor 39 itself. The factor [c3] is variations in zero point of the differential pressure sensor 39. The factor [c4] is variations in detection of the second exhaust temperature sensor 38 (when temperature correction is performed on the differential pressure). The factor [c5] is variations in the flow rate of exhaust gas. The factor [c6] is differential pressure variations due to a tolerance (wall thickness, pore diameter, or the like) of the DPF 22. The factor [c7] is variations (variations in PM unburned residue and PM accumulated portion) in the PM accumulation state of the DPF 22. The factor [c8] is variations in the amount of accumulation of ash and the accumulated portion in the DPF 22. The factor [c9] is variations in PM that adheres to the exhaust system components.

As described above, in the embodiment, the first threshold Th1 for the first estimation process and the second threshold Th2 for the second estimation process, the second threshold Th2 being larger than the first threshold Th1, are set in consideration of variations in the first and second thresholds Th1, Th2. Therefore, it is possible to accurately determine whether to shift into PM burning control on the basis of the PM accumulation amounts PMe, PMd respectively estimated by the first and second estimation processes. Thus, it is possible to suppress deterioration of fuel economy by reducing the frequency of PM burning control.

The second estimation process is permitted when the accumulated time Tsum, in which the condition for applying the differential pressure of the DPF 22 is satisfied, is longer than or equal to the predetermined time Ta (when the DPF differential pressure consultation permission flag dpflg is in the on state). Therefore, it is possible to reduce a deviation between the actual PM accumulation amount and the estimated PM accumulation amount PMd, so it is possible to suppress deterioration of fuel economy by reducing the frequency of PM burning control. Specifically, when the accumulated time Tsum, in which the condition for applying the differential pressure of the DPF 22 is satisfied, is shorter than the predetermined time Ta (when the DPF differential pressure consultation permission flag dpflg is in the off state), there is a large deviation between the upstream-downstream differential pressure ∆P of the DPF 22, detected by the differential pressure sensor 39, and the actual differential pressure as shown in FIG. 4. Therefore, the second estimation process is prohibited in such a situation. The second estimation process is executed only when the accumulated time Tsum, in which the condition for applying the differential pressure of the DPF 22 is satisfied, is longer than or equal to the predetermined time Ta. Therefore, it is possible to reduce a deviation between the actual PM accumulation amount and the estimated PM accumulation amount PMd, so it is possible to suppress deterioration of fuel economy by reducing the frequency of PM burning control.

The second estimation process is permitted when the PM accumulation amount PM1 in the DPF 22 is larger than or equal to the predetermined value PMa. Therefore, it is possible to reduce a deviation between the actual PM accumulation amount and the estimated PM accumulation amount PMd, so it is possible to suppress deterioration of fuel economy by reducing the frequency of PM burning control. Specifically, when the PM accumulation amount PM1 in the DPF 22 is smaller than the predetermined value PMa, the upstream-downstream differential pressure $\Delta P$ of the DPF 22, detected by the differential pressure sensor 39, steeply changes for the PM accumulation amount PM1 in the DPF 22 as shown in FIG. 5. Therefore, the second estimation process is prohibited in such a situation. The second estimation process is executed only when the PM accumulation amount PM1 in the DPF 22 is larger than or equal to the predetermined value PMa. Therefore, it is possible to reduce a deviation between the actual PM accumulation amount and the estimated PM accumulation amount PMd, so it is possible to suppress deterioration of fuel economy by reducing the frequency of PM burning control.

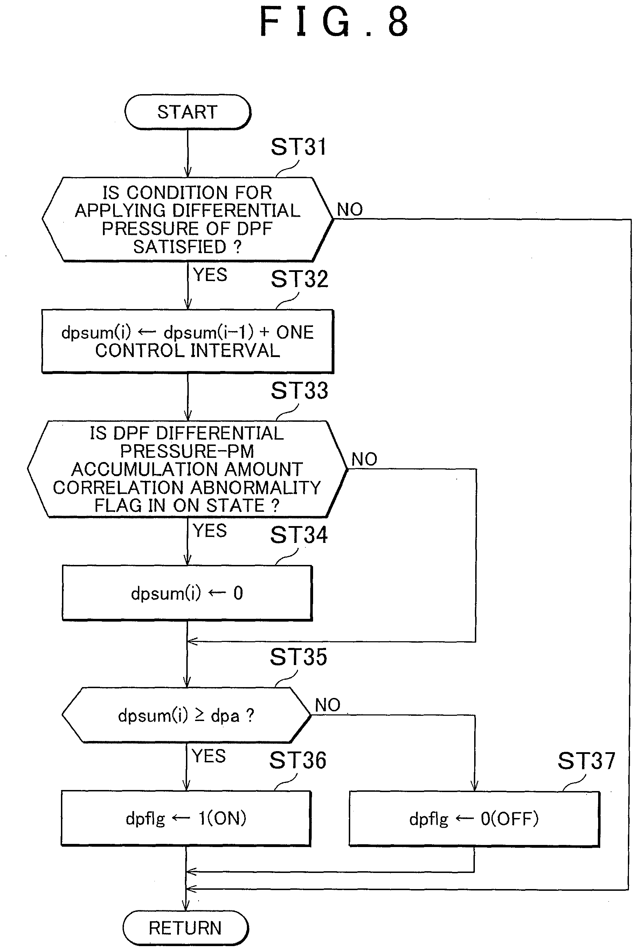

An alternative embodiment of control for calculating the DPF differential pressure consultation permission flag, which is executed by the ECU 100, will be described with reference to the flowchart shown in FIG. 8. In the flowchart shown in FIG. 8, the process of step ST33 differs from the process of step ST13 in FIG. 6; however, the processes of the other step ST31, step ST32, and step ST34 to step ST37 are similar to the processes of step ST11, step ST12, and step ST14 to step ST17.

Specifically, in step ST13 in FIG. 6, it is determined whether PM burning control has normally completed as a determination for clearing the counter value dpsum(i) of the DPF differential pressure consultation permission accumulation counter in step ST14. In this alternative embodiment, the determination of step ST33 is carried out as a determination for clearing the counter value dpsum(i) of the DPF differential pressure consultation permission accumulation counter in step ST34. That is, in step ST33, it is determined whether a DPF differential pressure-PM accumulation amount correlation abnormality flag is in an on state. When negative determination is made in step ST33, the process proceeds to step ST35. On the other hand, when affirmative determination is made in step ST33, the process proceeds to step ST34 and then proceeds to step ST35.

The DPF differential pressure-PM accumulation amount correlation abnormality flag in step ST33 is as follows. As described above, there is a correlation between the upstream-downstream differential pressure $\Delta P$ of the DPF 22 and the PM accumulation amount accumulated in the DPF 22. However, there is a possibility that the correlation therebetween deteriorates when, for example, any one of the following conditions [d1] to [d3] is satisfied.

The condition [d1] is the case where the vehicle repeatedly runs at a low speed in, for example, traffic congestion in an urban region (in other words, the condition is that the average vehicle speed is lower than a predetermined value). The condition [d2] is the case where the vehicle repeatedly makes a short trip, such as short-distance transportation and delivery (in other words, the condition is that a travel distance in one trip is shorter than a predetermined value). The condition [d3] is the case where the vehicle continues being left standing in an idle state or the vehicle continues running in a situation that detection of the differential pressure is difficult (in other words, the condition is that the frequency at which the differential pressure is detected by the differential pressure sensor 39 is smaller than a predetermined value).

When at least one of the above-described conditions [d1] to [d3] is satisfied, even when the counter value dpsum(i) of the DPF differential pressure consultation permission accumulation counter is larger than or equal to the predetermined value dpa (even when the accumulated time Tsum, in which the condition for applying the differential pressure of the DPF 22 is satisfied, is longer than or equal to the predetermined time Ta), there is a possibility that the estimation accuracy of the PM accumulation amount PMd in the DPF 22, estimated by the second estimation process, deteriorates. Therefore, in this alternative embodiment, when at least one of the above-described conditions [d1] to [d3] is satisfied, the DPF differential pressure-PM accumulation amount correlation abnormality flag is set to the on state; whereas, when none of the above-described conditions [d1] to [d3] is satisfied, the DPF differential pressure-PM accumulation amount correlation abnormality flag is set to the off state.

In step ST33, it is determined whether the DPF differential pressure-PM accumulation amount correlation abnormality flag is in the on state. When affirmative determination is made in step ST33, the counter value dpsum(i) of the DPF differential pressure consultation permission accumulation counter is cleared in step ST34. In this way, the condition (running pattern) that there is a possibility that the DPF differential pressure-PM accumulation amount correlation deteriorates is employed as the condition for clearing the counter value dpsum(i) of the DPF differential pressure consultation permission accumulation counter. Thus, it is possible to reduce a deviation between the actual PM accumulation amount and the estimated PM accumulation amount PMd, so it is possible to suppress deterioration of fuel economy by reducing the frequency of PM burning control.

In the above-described embodiment, the DPF 22 is used as a filter that collects PM contained in exhaust gas.

Instead, another filter (for example, a DPNR catalyst, or the like) may be used.

In the above-described embodiment, when both the condition that the accumulated time Tsum, in which the condition for applying the differential pressure of the DPF 22 is satisfied, is longer than or equal to the predetermined time Ta and the condition that the PM accumulation amount PM1 in the DPF 22 is larger than or equal to the predetermined value PMa are satisfied, it is determined that it is the situation that the estimation accuracy of the PM accumulation amount PMd in the DPF 22, estimated by the second estimation process, is ensured. However, not limited to this condition, when at least one of the condition that the accumulated time Tsum, in which the condition for applying the differential pressure of the DPF 22 is satisfied is longer than or equal to the predetermined time Ta, and the condition that the PM accumulation amount PM1 in the DPF 22 is larger than or equal to the predetermined value PMa is satisfied, it may be determined that it is the situation that the estimation accuracy of the PM accumulation amount PMd in the DPF 22, estimated by the second estimation process, is ensured.

In the above-described embodiment, the fuel addition valve 23 is provided upstream of the DPF 22, and PM burning control is executed by adding fuel with the fuel addition valve 23; however, PM burning control is not limited to this configuration. PM burning control may be executed such that main fuel injection (main injection) that is fuel injection for operating the engine (fuel injection from the injector 2 to the corresponding combustion chamber 1a) is carried out and then fuel injection (post injection) is carried out from the injector 2 to the corresponding combustion chamber, 1a. Alternatively, PM burning control may be executed by combining addition of fuel from the fuel addition valve 23 with post injection from the injector 2.

The above description provides an example in which the exhaust emission control system according to the invention is applied to the in-cylinder direct-injection four-cylinder diesel engine; however, the invention is not limited to this configuration. The invention is also applicable to a diesel engine having any number of cylinders, such as an in-cylinder direct-injection six-cylinder diesel engine. In addition, the exhaust emission control system according to the invention is also applicable to a lean-burn gasoline engine in which an operating range for carrying out engine operation by subjecting air-fuel mixture of a high air-fuel ratio (lean atmosphere) to combustion occupies almost all the operating range.

The invention is usable in an exhaust emission control system for an internal combustion engine including a filter that collects particulate matter contained in exhaust gas that is emitted from the internal combustion engine (mainly, a diesel engine).

**Claims**

1.  An exhaust emission control system for an internal combustion engine (1), the exhaust emission control system **characterized by** comprising:

    a filter (22) arranged in an exhaust passage (4) of the internal combustion engine (1), the filter (22) configured to collect particulate matter contained in exhaust gas that is emitted from the internal combustion engine (1);
    a differential pressure sensor (39) configured to detect a differential pressure between an upstream side and downstream side of the filter (22); and
    an electronic control unit (100) including a first estimation portion and a second estimation portion in order to estimate an amount of accumulation of the particulate matter accumulated in the filter (22), the first estimation portion configured to estimate the amount of accumulation on the basis of an amount of particulate matter emitted from the internal combustion engine (1), the second estimation portion configured to estimate the amount of accumulation on the basis of the differential pressure between the upstream side and downstream side of the filter (22),
    the electronic control unit (100) configured to:

    (a) estimate an amount of accumulation of particulate matter accumulated in the filter (22),
    (b) execute burning control for burning the particulate matter accumulated in the filter (22) when the estimated amount of accumulation of the particulate matter has reached a preset threshold,
    (c) include a first threshold for the first estimation portion and a second threshold for the second estimation portion as the preset threshold, the second threshold being larger than the first threshold, and
    (d) allow the second estimation portion to estimate the amount of accumulation when an accumulated time, in which a condition for applying the differential pressure between the upstream side and downstream side of the filter (22) is satisfied, is longer than or equal to a preset threshold.

2.  The exhaust emission control system according to claim 1, wherein
    the electronic control unit (100) is configured to allow the second estimation portion to estimate the amount of accumulation when the amount of accumulation is larger than or equal to the preset threshold.

3. The exhaust emission control system according to claim 1, wherein
the electronic control unit (100) is configured to clear the accumulated time when the burning control has normally completed.

4. The exhaust emission control system according to claim 1, wherein
the electronic control unit (100) is configured to clear the accumulated time when at least one of following conditions (i) to (iii) is satisfied,

(i) a condition that an average vehicle speed is lower than a predetermined value,
(ii) a condition that a travel distance in one trip is shorter than a predetermined value, and
(iii) a condition that a frequency at which the differential pressure is detected by the differential pressure sensor (39) is smaller than a predetermined value is satisfied.

5. A control method for an exhaust emission control system for an internal combustion engine (1), the exhaust emission control system including: a filter (22) arranged in an exhaust passage (4) of the internal combustion engine (1), the filter (22) configured to collect particulate matter contained in exhaust gas that is emitted from the internal combustion engine (1); and a differential pressure sensor (39) configured to detect a differential pressure between an upstream side and downstream side of the filter (22), the control method **characterized by** comprising:

(a) estimating an amount of accumulation of particulate matter accumulated in the filter (22);
(b) executing burning control for burning the particulate matter accumulated in the filter (22) when the estimated amount of accumulation of the particulate matter has reached a preset threshold; and
(c) executing a first estimation process for estimating the amount of accumulation of the particulate matter on the basis of an amount of particulate matter emitted from the internal combustion engine (1) and a second estimation process for estimating the amount of accumulation on the basis of the differential pressure between the upstream side and downstream side of the filter (22) in order to estimate the amount of accumulation of the particulate matter accumulated in the filter (22), a first threshold for the first estimation process and a second threshold for the second estimation process being provided as the preset threshold, and the second threshold being larger than the first threshold;

wherein the second estimation process is allowed to estimate the amount of accumulation when an accumulated time, in which a condition for applying the differential pressure between the upstream side and downstream side of the filter (22) is satisfied, is longer than or equal to a preset threshold.

6. The control method according to claim 5, wherein
the second estimation process is allowed to estimate the amount of accumulation when the amount of accumulation is larger than or equal to the preset threshold.

7. The control method according to claim 5, wherein
the accumulated time is cleared when the burning control has normally completed.

8. The control method according to claim 5, wherein
the accumulated time is cleared when at least one of following conditions is satisfied,

(i) a condition that an average vehicle speed is lower than a predetermined value,
(ii) a condition that a travel distance in one trip is shorter than a predetermined value, and
(iii) a condition that a frequency at which the differential pressure is detected by the differential pressure sensor (39) is smaller than a predetermined value.

**Patentansprüche**

1. Abgasemissionssteuersystem für eine Verbrennungskraftmaschine (1), wobei das Abgasemissionssteuersystem **dadurch gekennzeichnet ist, dass** es aufweist:

einen Filter (22), der in einer Abgasleitung (4) der Verbrennungskraftmaschine (1) angeordnet ist, wobei der Filter (22) so konfiguriert ist, dass er Partikel, die in dem Abgas enthalten sind, das von der Verbrennungskraftmaschine (1) ausgestoßen wird, sammelt;

einen Differentialdrucksensor (39), der so konfiguriert ist, dass er einen Differentialdruck zwischen einer Stromaufwärtsseite und einer Stromabwärtsseite des Filters (22) erfasst; und

eine elektronische Steuereinheit (100), die einen ersten Schätzabschnitt und einen zweiten Schätzabschnitt beinhaltet, um eine Ansammlungsmenge der in dem Filter (22) gesammelten Partikel zu schätzen, wobei der erste Schätzabschnitt so konfiguriert ist, dass er die Ansammlungsmenge auf Basis einer Menge an Partikeln, die aus der Verbrennungskraftmaschine emittiert werden, schätzt, und der zweite Schätzabschnitt so konfiguriert ist, dass er die Ansammlungsmenge auf Basis des Differentialdrucks zwischen der Stromaufwärtsseite und der Stromabwärtsseite des Filters (22) schätzt,

wobei die elektronische Steuereinheit (100) so konfiguriert ist, dass sie:

a) eine Ansammlungsmenge von Partikeln, die in dem Filter (22) gesammelt sind, schätzt,

b) eine Verbrennungssteuerung zum Verbrennen der in dem Filter (22) gesammelten Partikel ausführt, wenn die geschätzte Ansammlungsmenge von Partikeln einen voreingestellten Schwellenwert erreicht hat,

c) einen ersten Schwellenwert für den ersten Schätzabschnitt und einen zweiten Schwellenwert für den zweiten Schätzabschnitt als den voreingestellten Schwellenwert beinhaltet, wobei der zweite Schwellenwert größer ist als der erste Schwellenwert, und

d) es dem zweiten Schätzabschnitt ermöglicht, die Ansammlungsmenge zu schätzen, wenn eine angesammelte Zeit, in der eine Bedingung zum Anlegen des Differentialdrucks zwischen der Stromaufwärtsseite und Stromabwärtsseite des Filters (22) erfüllt wird, gleich oder länger ist als ein voreingestellter Schwellenwert.

2. Abgasemissionssteuersystem nach Anspruch 1, wobei
die elektronische Steuereinheit (100) so konfiguriert ist, dass sie es dem zweiten Schätzabschnitt ermöglicht, die Ansammlungsmenge zu schätzen, wenn die Ansammlungsmenge gleich oder größer ist als der voreingestellte Schwellenwert.

3. Abgasemissionssteuersystem nach Anspruch 1, wobei
die elektronische Steuereinheit (100) so konfiguriert ist, dass sie die angesammelte Zeit zurücksetzt, wenn die Verbrennungssteuerung normal beendet wurde.

4. Abgasemissionssteuersystem nach Anspruch 1, wobei
die elektronische Steuereinheit (100) so konfiguriert ist, dass sie die angesammelte Zeit zurücksetzt, wenn zumindest eine der folgenden Bedingungen (i) bis (iii) erfüllt ist,

i. eine Bedingung, dass eine durchschnittliche Fahrzeuggeschwindigkeit niedriger ist als ein vorgegebener Wert,
ii. eine Bedingung, dass eine Reiseentfernung in einer Fahrt kürzer ist als ein vorgegebener Wert, und
iii. eine Bedingung, dass eine Häufigkeit, mit der der Differentialdruck durch den Differentialdrucksensor (39) erfasst wird, geringer ist als ein vorgegebener Wert.

5. Steuerverfahren für ein Abgasemissionssteuersystem für eine Verbrennungskraftmaschine (1), wobei das Abgasemissionssteuersystem beinhaltet: einen Filter (22), der in einer Abgasleitung (4) der Verbrennungskraftmaschine (1) angeordnet ist, wobei der Filter (22) so konfiguriert ist, dass er Partikel sammelt, die im Abgas enthalten sind, das von der Verbrennungskraftmaschine (1) emittiert wird; und einen Differentialdrucksensor (39), der so konfiguriert ist, dass er einen Differentialdruck zwischen einer Stromaufwärtsseite und einer Stromabwärtsseite des Filters (22) erfasst, wobei das Steuerverfahren **dadurch gekennzeichnet ist, dass** es aufweist:

a) Schätzen einer Ansammlungsmenge von Partikeln, die in dem Filter (22) gesammelt sind;
b) Ausführen einer Verbrennungssteuerung zum Verbrennen der in dem Filter (22) gesammelten Partikel, wenn die geschätzte Ansammlungsmenge von Partikeln einen voreingestellten Schwellenwert erreicht hat, und
c) Ausführen eines ersten Schätzvorgangs zum Schätzen der Ansammlungsmenge der Partikel auf Basis einer Partikelmenge, die aus der Verbrennungskraftmaschine (1) emittiert wird, und eines zweiten Schätzvorgangs zum Schätzen der Ansammlungsmenge auf der Basis des Differentialdrucks zwischen der Stromaufwärtsseite und Stromabwärtsseite des Filters (22), um die Ansammlungsmenge der Partikel, die in dem Filter (22) gesammelt sind, zu schätzen, wobei ein erster Schwellenwert für den ersten Schätzvorgang und ein zweiter Schwellenwert für den zweiten Schätzvorgang als der voreingestellte Schwellenwert vorhanden sind, und wobei der zweite Schwellenwert größer ist als der erste Schwellenwert; wobei es dem zweiten Schätzvorgang ermöglicht wird, die Ansammlungsmenge zu schätzen, wenn eine angesammelte Zeit, in der eine Bedingung zum Anlegen des Differentialdrucks zwischen der Stromaufwärtsseite und Stromabwärtsseite des Filters (22) erfüllt wird, gleich oder länger ist als ein voreingestellter Schwellenwert.

**6.** Steuerverfahren nach Anspruch 5, wobei
es dem zweiten Schätzvorgang ermöglicht wird, die Ansammlungsmenge zu schätzen, wenn die Ansammlungsmenge gleich oder größer ist als der voreingestellte Schwellenwert.

**7.** Steuerverfahren nach Anspruch 5, wobei
die angesammelte Zeit zurückgesetzt wird, wenn die Verbrennungssteuerung normal beendet wurde.

**8.** Steuerverfahren nach Anspruch 5, wobei
die angesammelte Zeit zurückgesetzt wird, wenn zumindest eine der folgenden Bedingungen erfüllt wird:

i. eine Bedingung, dass eine durchschnittliche Fahrzeuggeschwindigkeit niedriger ist als ein vorgegebener Wert,
ii. eine Bedingung, dass eine Reiseentfernung in einer Fahrt kürzer ist als ein vorgegebener Wert, und
iii. eine Bedingung, dass eine Häufigkeit, mit der der Differentialdruck durch den Differentialdrucksensor (39) erfasst wird, geringer ist als ein vorgegebener Wert.

## Revendications

**1.** Système de commande d'émission d'échappement pour un moteur à combustion interne (1), le système de commande d'émission d'échappement étant **caractérisé en ce qu'**il comprend :

un filtre (22) agencé dans un passage d'échappement (4) du moteur à combustion interne (1), le filtre (22) étant configuré pour collecter de la matière particulaire contenue dans le gaz d'échappement qui est émis par le moteur à combustion interne (1) ;
un capteur de pression différentielle (39) configuré pour détecter une pression différentielle entre un côté amont et un côté aval du filtre (22) ; et
une unité de commande électronique (100) incluant une première partie d'estimation et une seconde partie d'estimation afin d'estimer une quantité d'accumulation de la matière particulaire accumulée dans le filtre (22), la première partie d'estimation étant configurée pour estimer la quantité d'accumulation en fonction d'une quantité de matière particulaire émise par le moteur à combustion interne (1), la seconde partie d'estimation étant configurée pour estimer la quantité d'accumulation en fonction de la pression différentielle entre le côté amont et le côté aval du filtre (22),
l'unité de commande électronique (100) étant configurée pour :

(a) : estimer une quantité d'accumulation de matière particulaire accumulée dans le filtre (22),
(b) exécuter une commande de combustion pour brûler la matière particulaire accumulée dans le filtre (22) quand la quantité estimée d'accumulation de la matière particulaire a atteint un seuil préétabli,
(c) inclure un premier seuil pour la première partie d'estimation et un second seuil pour la seconde partie d'estimation comme le seuil préétabli, le second seuil étant plus grand que le premier seuil, et
(d) permettre à la seconde partie d'estimation d'estimer la quantité d'accumulation quand un temps accumulé, durant lequel une condition pour appliquer la pression différentielle entre le côté amont et le côté aval du filtre (22) est satisfaite, est supérieur ou égal à un seuil préétabli.

**2.** Système de commande d'émission d'échappement selon la revendication 1, dans lequel
l'unité de commande électronique (100) est configurée pour permettre à la seconde partie d'estimation d'estimer la quantité d'accumulation quand la quantité d'accumulation est supérieure ou égale au seuil préétabli.

**3.** Système de commande d'émission d'échappement selon la revendication 1, dans lequel
l'unité de commande électronique (100) est configurée pour effacer le temps accumulé quand la commande de combustion s'est terminée normalement.

**4.** Système de commande d'émission d'échappement selon la revendication 1, dans lequel
l'unité de commande électronique (100) est configurée pour effacer le temps accumulé quand au moins une des conditions (i) à (iii) suivantes est satisfaite,

(i) une condition qu'une vitesse de véhicule moyenne est inférieure à une valeur prédéterminée,
(ii) une condition qu'une distance d'avance dans un trajet est plus courte qu'une valeur prédéterminée, et
(iii) une condition qu'une fréquence à laquelle la pression différentielle est détectée par le capteur de pression différentielle (39) est inférieure à une valeur prédéterminée est satisfaite.

5. Procédé de commande pour un système de commande d'émission d'échappement, pour un moteur à combustion interne (1), le système de commande d'émission d'échappement incluant : un filtre (22) agencé dans un passage d'échappement (4) du moteur à combustion interne (1), le filtre (22) étant configuré pour collecter de la matière particulaire contenue dans le gaz d'échappement qui est émis par le moteur à combustion interne (1) ; et un capteur de pression différentielle (39) configuré pour détecter une pression différentielle entre un côté amont et un côté aval du filtre (22), le procédé de commande étant **caractérisé en ce qu'**il comprend :

   (a) d'estimer une quantité d'accumulation de la matière particulaire accumulée dans le filtre (22) ;
   (b) exécuter une commande de combustion pour brûler la matière particulaire accumulée dans le filtre (22) quand la quantité estimée d'accumulation de la matière particulaire a atteint un seuil préétabli ; et
   (c) exécuter un premier processus d'estimation pour estimer la quantité d'accumulation de la matière particulaire en fonction d'une quantité de matière particulaire émise par le moteur à combustion interne (1) et un second processus d'estimation pour estimer la quantité d'accumulation en fonction de la pression différentielle entre le côté amont et le côté aval du filtre (22) afin d'estimer la quantité d'accumulation de la matière particulaire accumulée dans le filtre (22), un premier seuil pour le premier processus d'estimation et un second seuil pour le second processus d'estimation étant fournis comme le seuil préétabli, et le second seuil étant supérieur au premier seuil ;

   dans lequel le second processus d'estimation peut estimer la quantité d'accumulation quand un temps accumulé, durant lequel une condition pour appliquer la pression différentielle entre le côté amont et le côté aval du filtre (22) est satisfaite, est supérieur ou égal à un seuil préétabli.

6. Procédé de commande selon la revendication 5, dans lequel le second processus d'estimation peut estimer la quantité d'accumulation quand la quantité d'accumulation est supérieure ou égale au seuil préétabli.

7. Procédé de commande selon la revendication 5, dans lequel le temps accumulé est effacé quand la commande de combustion s'est normalement terminée.

8. Procédé de commande selon la revendication 5, dans lequel le temps accumulé est effacé quand au moins une des conditions suivantes est satisfaite,

   (i) une condition qu'une vitesse de véhicule moyenne est inférieure à une valeur prédéterminée,
   (ii) une condition qu'une distance d'avance dans un trajet est plus courte qu'une valeur prédéterminée, et
   (iii) une condition qu'une fréquence à laquelle la pression différentielle est détectée par le capteur de pression différentielle (39) est inférieure à une valeur prédéterminée.

FIG.1

EP 3 025 033 B1

# F I G . 2

31 — ENGINE ROTATION SPEED SENSOR

32 — COOLANT TEMPERATURE SENSOR

33 — AIR FLOW METER

34 — INTAKE AIR TEMPERATURE SENSOR

35 — INTAKE AIR PRESSURE SENSOR

36 — A/F SENSOR

37 — FIRST EXHAUST TEMPERATURE SENSOR

38 — SECOND EXHAUST TEMPERATURE SENSOR

39 — DIFFERENTIAL PRESSURE SENSOR

40 — RAIL PRESSURE SENSOR

41 — THROTTLE OPENING DEGREE SENSOR

42 — ACCELERATOR OPERATION AMOUNT SENSOR

43 — VEHICLE SPEED SENSOR

2 — INJECTORS

10 — SUPPLY PUMP

23 — FUEL ADDITION VALVE

51 — THROTTLE MOTOR

64 — VARIABLE NOZZLE VANE MECHANISM

72 — EGR VALVE

105 INPUT INTERFACE

106 OUTPUT INTERFACE

100 : ECU

104 BACKUP RAM

103 RAM

102 ROM

101 CPU

107

# F I G . 3

pme: PM EMISSION AMOUNT

# F I G . 4

# F I G . 5

PM ACCUMULATION
AMOUNT PM1 (g/unit)

(y-axis) UPSTREAM-DOWNSTREAM DIFFERENTIAL PRESSURE $\Delta P$

# FIG. 6

```
          ( START )
             │
             ▼                              ST11
    ┌─────────────────────┐
   ╱   IS CONDITION FOR    ╲        NO
  ╱  APPLYING DIFFERENTIAL  ╲───────────────────────┐
  ╲    PRESSURE OF DPF      ╱                        │
   ╲      SATISFIED ?      ╱                         │
    └─────────────────────┘                          │
             │ YES           ST12                     │
             ▼                                        │
    ┌─────────────────────────────┐                  │
    │ dpsum(i) ← dpsum(i−1) + ONE  │                  │
    │      CONTROL INTERVAL        │                  │
    └─────────────────────────────┘                  │
             │               ST13                     │
             ▼                                        │
    ┌─────────────────────┐                           │
   ╱    HAS PM BURNING     ╲       NO                 │
  ╱  CONTROL NORMALLY       ╲──────────────┐          │
   ╲    COMPLETED ?        ╱                │          │
    └─────────────────────┘                 │          │
             │ YES     ST14                  │          │
             ▼                               │          │
    ┌─────────────────────┐                  │          │
    │    dpsum(i) ← 0      │                  │          │
    └─────────────────────┘                  │          │
             │◄──────────────────────────────┘          │
             │          ST15                             │
             ▼                                           │
    ┌─────────────────────┐                              │
   ╱   dpsum(i) ≥ dpa ?    ╲      NO                     │
   ╲                      ╱────────────┐                 │
    └─────────────────────┘            │                 │
             │ YES    ST16              │     ST17        │
             ▼                          ▼                 │
    ┌─────────────────────┐   ┌─────────────────────┐     │
    │   dpflg ← 1(ON)     │   │   dpflg ← 0(OFF)    │     │
    └─────────────────────┘   └─────────────────────┘     │
             │◄──────────────────────┘                    │
             │◄───────────────────────────────────────────┘
             ▼
         ( RETURN )
```

# FIG.7

START

ST21

dpflg = 1(ON) ? — NO

YES

ST22

gpm ≥ ga ? — NO

YES

ST24

pmlmt ← Th2

ST23

pmlmt ← Th1

RETURN

# FIG.8

```
        ┌──────────┐
        │  START   │
        └──────────┘
              │
              ▼                            ST31
    ╱─────────────────────╲
   ╱  IS CONDITION FOR     ╲
  ╱  APPLYING DIFFERENTIAL  ╲  NO
  ╲   PRESSURE OF DPF       ╱ ──────────────────┐
   ╲    SATISFIED ?        ╱                     │
    ╲─────────────────────╱                      │
              │ YES          ST32                │
              ▼                                  │
    ┌─────────────────────────┐                 │
    │ dpsum(i) ← dpsum(i-1) +  │                 │
    │ ONE CONTROL INTERVAL     │                 │
    └─────────────────────────┘                 │
              │                 ST33             │
              ▼                                  │
    ╱─────────────────────────╲                 │
   ╱  IS DPF DIFFERENTIAL      ╲                │
  ╱   PRESSURE-PM               ╲  NO           │
  ╲  ACCUMULATION AMOUNT        ╱ ──────┐       │
   ╲ CORRELATION ABNORMALITY   ╱        │       │
    ╲ FLAG IN ON STATE ?      ╱         │       │
     ╲───────────────────────╱         │       │
              │ YES     ST34            │       │
              ▼                         │       │
    ┌─────────────────────────┐        │       │
    │     dpsum(i) ← 0         │        │       │
    └─────────────────────────┘        │       │
              │◄───────────────────────┘       │
              │          ST35                   │
              ▼                                  │
    ╱─────────────────────╲  NO                 │
   ╱   dpsum(i) ≥ dpa ?    ╲ ──────────┐        │
    ╲─────────────────────╱            │        │
              │ YES    ST36            │  ST37   │
              ▼                        ▼         │
    ┌──────────────────┐      ┌──────────────────┐
    │  dpflg ← 1(ON)   │      │  dpflg ← 0(OFF)  │
    └──────────────────┘      └──────────────────┘
              │◄───────────────────────┘         │
              │◄───────────────────────────────── 
              ▼
        ┌──────────┐
        │  RETURN  │
        └──────────┘
```

**EP 3 025 033 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012132468 A
- EP 1722082 A2
- US 20060179826 A1